# EUROPÄISCHE PATENTSCHRIFT

(11) **EP 2 486 551 B1**
(45) Veröffentlichungstag und Bekanntmachung des Hinweises auf die Patenterteilung: **12.02.2020**
(21) Anmeldenummer: 10763625.0
(22) Anmeldetag: 04.10.2010
(51) Int. Cl.: G07F 7/10, H04L 29/06

(54) **PERSONALISIEREN EINES TELEKOMMUNIKATIONSMODULS**
PERSONALIZATION OF A TELECOMMUNICATIONS MODULE
PERSONNALISATION D'UN MODULE DE TÉLÉCOMMUNICATION

(30) Priorität: 05.10.2009 DE 102009048239
(43) Veröffentlichungstag der Anmeldung: 15.08.2012
(73) Patentinhaber: Giesecke+Devrient Mobile Security GmbH, 81677 München (DE)
(72) Erfinder: MAMUZIC, Nikola, 81829 München (DE)
(86) Internationale Anmeldenummer: PCT/EP2010/006054
(87) Internationale Veröffentlichungsnummer: WO 2011/042144

(56) Entgegenhaltungen:
- EP-A2- 1 912 184
- WO-A1-2008/009094
- US-A1- 2007 260 822

## Beschreibung

Die vorliegende Erfindung betrifft ein Verfahren zum Personalisieren eines in einem Endgerät eingebetteten Telekommunikationsmoduls mittels eines portablen Datenträgers sowie ein Telekommunikationsmodul, einen portablen Datenträger und ein Endgerät mit darin eingebettetem Telekommunikationsmodul.

Es ist üblich, Chipkarten, die einem bestimmten Nutzer zugeordnet werden, z.B. kartenförmige Telekommunikationsmodule, wie z.B. zum Beispiel (U)SIM-Mobilfunkmodule, oder wertbehaftete Geld-, Bank- oder Kreditkarten, bei der Herstellung einerseits mit Nutzer-, Verwendungs- und/oder Dienstanbieter-unabhängigen Initialisierungsdaten und andererseits mit Nutzer-, Verwendungs- und/ oder Dienstanbieter-abhängigen Personalisierungsdaten auszustatten. Diese beiden separaten Schritte werden als Initialisierung/ Vorpersonalisierung und Personalisierung/ Individualisierung bezeichnet. Im Falle von Mobilfunkmodulen, die einem späteren Nutzer einen Zugang zu einem Mobilfunknetz eines Mobilfunkdienstanbieters zur mobilen Datenkommunikation bereitstellen, umfassen derartige Personalisierungsdaten insbesondere nutzerabhängige Daten, wie z.B. Identifikationsangaben eines Privatnutzers oder einer Firma und Dienstanbieter-abhängige Daten, wie z.B. die Netzzugangsdaten oder dergleichen. Diese frühe Personalisierung durch den Modulhersteller hat Sicherheitsvorteile, denn eine in der gesicherten Einflusssphäre des Modulherstellers vorgenommene Personalisierung eines Mobilfunkmoduls kann später nicht mehr mit unlauterer Absicht rückgängig oder geändert werden.

Sofern ein Telekommunikationsmodul jedoch fest in ein Endgerät eingebaut wird, um ein eingebettetes System ("Embedded System") zu bilden, ist das frühe Personalisieren durch den Modulhersteller nachteilig, da dem Hersteller des Endgeräts dessen späterer Betreiber und Betriebsort zum Zeitpunkt der Modulherstellung zumeist nicht bekannt ist. Zumindest die Kenntnis des Betriebsortes des Endgeräts ist bei der Personalisierung von einzubettenden Telekommunikationsmodulen jedoch notwendig, um Zugangsdaten eines an diesem Ort verfügbaren Mobilfunknetzes aufspielen zu können.

Diese Problematik, insbesondere der damit einhergehende logistische und Verwaltungsaufwand, verhindert die Verbreitung derartiger eingebetteter Telekommunikationsmodule, insbesondere in Form von Telemetrie- und/oder M2M-Einrichtungen ("Machine-to-Machine") zur automatisierten Datenkommunikation zwischen Endgeräten, Maschinen, Automaten, Fahrzeugen, Containern oder dergleichen mit einer zentralen Leitstelle, z.B. bei einer Messwerterfassung im Rahmen einer Fernüberwachung, -kontrolle und -wartung von Maschinen, Anlagen und Systemen.

Die DE 10 2006 024 041 A1 offenbart ein Verfahren zur Personalisierung von Telekommunikationsmodulen in einem Telekommunikationsendgerät, indem der Nutzer Personalisierungsdaten an eine vertrauenswürdige Instanz übergibt, welche die Personalisierungsdaten prüft und anschließend die Personalisierung des Telekommunikationsmoduls vornimmt. Demgegenüber offenbart die DE 10 2005 007 581 A1 ein Personalisierungsverfahren für Telekommunikationsmodule, bei dem sich das Telekommunikationsmodul selbst mittels einer geeigneten Personalisierungssoftware personalisiert. Mit der Personalisierung eingebetteter Telekommunikationsmodule beschäftigen sich die beiden Schriften jedoch nicht.

Es ist demzufolge die Aufgabe der vorliegenden Erfindung, eine möglichst effiziente Personalisierung eines Telekommunikationsmoduls zu ermöglichen, welches bereits in einem Endgerät eingebettet ist.

EP 1 912 184 A2 offenbart eine Vorrichtung und ein Verfahren zur Erzeugung von Daten zur Initialisierung von Sicherheitsdatenträgern, wobei die Vorrichtung ein tragbares Modul ist, das eine USB-Schnittstelle und einen Speicher aufweist, in welchem für die Erzeugung der Initialisierungsdaten benötigte Geheimdaten abgespeichert sind.

Diese Aufgabe wird durch ein Verfahren und Vorrichtungen mit den Merkmalen der unabhängigen Ansprüche gelöst. Vorteilhafte Ausführungsformen und Weiterbildungen sind in den abhängigen Ansprüchen angegeben.

Erfindungsgemäß wird ein Telekommunikationsmodul in ein Endgerät fest eingebaut (eingebettet) und anschließend personalisiert, indem auf einem portablen Datenträger gespeicherte Personalisierungsdaten über eine gesicherte Datenkommunikationsverbindung in das Telekommunikationsmodul eingespielt werden, wobei die Datenkommunikationsverbindung mittels korrespondierenden Transportschlüsseln des Datenträgers und des Moduls kryptographisch, d.h. durch geeignetes Ver- und Entschlüsseln der übertragenen Daten, gesichert wird.

Die Erfindung erlaubt auf diese Weise die späte Personalisierung eines Telekommunikationsmoduls nach seiner Einbettung in ein Endgerät bzw. an dem Betriebsort des Endgeräts. Die Verlagerung der Personalisierung aus der Einflusssphäre des Modulherstellers in die Einflusssphäre des Herstellers bzw. Betreibers des Endgeräts hat hier keine Sicherheitsnachteile, da die Übertragung der Personalisierungsdaten durch die kryptographische Sicherung mittels der korrespondierenden Transportschlüssel hinreichen abgesichert ist.

Der Modulhersteller des Telekommunikationsmoduls stellt aus Zweckmäßigkeits- und Sicherheitsgründen vorzugsweise auch den portablen Datenträger her. Insofern sind die korrespondierenden Transportschlüssel des Moduls und des Datenträgers nur dem Modulhersteller bekannt, vorzugsweise werden sie von dem Modulhersteller erzeugt. Während eines Herstellungsprozesses des Telekommunikationsmoduls wird dieses zunächst initialisiert (vorpersonalisiert), d.h. mit festen Nutzer-, Verwendungs- und/oder Dienstleistungsanbieter-unabhängigen Initialisierungsdaten ausgestattet, während anstelle einer Personalisierung der dem Modul zugeordnete Transportschlüssel in dem Telekommunikationsmodul hinterlegt wird. Demgegenüber werden in einem gesicherten Speicherbereich des Datenträgers die Nutzer-, Verwendungs- und/oder Dienstanbieter-abhängigen Personalisierungsdaten sowie der dem Datenträger zugeordnete Transportschlüssel hinterlegt.

Ein entsprechend unpersonalisiertes, erfindungsgemäßes Telekommunikationsmodul umfasst eine Datenkommunikationsschnittstelle zum Aufbau der gesicherten Datenkommunikationsverbindung zu dem portablen Datenträger sowie einen geeigneten Speicher mit einem darin abgelegten Transportschlüssel, der mit einem Transportschlüssel eines Datenträgers korrespondiert, auf welchem die für das unpersonalisierte Telekommunikationsmodul bestimmten Personalisierungsdaten abgelegt sind. Ferner umfasst ein erfindungsgemäßes Telekommunikationsmodul eine Steuereinrichtung, die mit Hilfe des Transportschlüssels die Personalisierungsdaten von dem Datenträger über die Datenkommunikationsverbindung kryptographisch gesichert entgegennimmt.

Ein Endgerät, in welches ein solches unpersonalisiertes Telekommunikationsmodul fest eingebettet ist, ist in der Regel ein Computer oder eine anderweitige M2M-Datenverarbeitungseinrichtung, die eine automatisierte Datenkommunikation mit einer zentralen Leitstelle über einen Mobilfunknetzzugang durchführt, der von dem (personalisierten) Telekommunikationsmodul bereitgestellt wird. Das Endgerät ist als Telemetrie-, Überwachungs-, Steuer-, Regelungs-, Wartungseinrichtung oder dergleichen in einen bestimmten technischen Kontext eingebunden, um an Maschinen, Automaten, Fahrzeugen oder dergleichen Messwerte zu erfassen und diese über eine Antenne und das Mobilfunknetz als Mess- oder Überwachungsprotokolle an die Leitstelle weiterzuleiten oder von der Leitstelle empfangene Steuersignale an die zu steuernde Maschine weiterzuleiten.

Ein erfindungsgemäßer portabler Datenträger umfasst eine mit der Datenkommunikationsschnittstelle des Telekommunikationsmoduls korrespondierende Datenkommunikationsschnittstelle zum Aufbau der gesicherten Datenkommunikationsverbindung. In einem gesicherten Speicher des portablen Datenträgers ist einerseits ein zu dem Transportschlüssel des Telekommunikationsmoduls korrespondierender Transportschlüssel und andererseits die zu übertragenden Personalisierungsdaten hinterlegt. Ferner umfasst der Datenträger eine Steuereinrichtung, die mittels des Transportschlüssels gesicherte Personalisierungsdaten über die Datenkommunikationsverbindung an das Telekommunikationsmodul zu dessen Personalisierung überträgt. Um die unerlaubte Entnahme des Transportschlüssels oder der Personalisierungsdaten aus dem Datenträger zu verhindern, ist dieser zudem als sicherer Datenträger mit einem gesicherten Speicherbereich ausgestaltet, z.B. als SD-Speicherkarte, sicheres Token oder eine anderweitig abgesicherte Chipkarte, Smart Card oder dergleichen.

Nach der Herstellung des Moduls und des Datenträgers wird zumindest das Modul an den Hersteller des Endgeräts ausgeliefert, so dass dieser das noch unpersonalisierte Telekommunikationsmodul in das Endgeräts einbetten kann. Der Datenträger wird entweder gemeinsam mit dem Modul an den Endgerätehersteller ausgeliefert oder erst später an den Endgerätehersteller, - betreiber oder -nutzer, z.B. auf Anfrage eines Endgerätebetreibers nach Installation des Endgeräts an einem Betriebsort. Die Personalisierung des Telekommunikationsmoduls wird dann am Betriebsort des Endgeräts durch dessen Betreiber durchgeführt.

Am Betriebsort des Endgeräts wird eine vorzugsweise kontaktbehaftete Datenkommunikationsverbindung zwischen dem Datenträger und dem Telekommunikationsmodul aufgebaut, um die Personalisierungsdaten in das Modul einzuspielen. Die kontaktbehaftete Datenkommunikationsverbindung wird über korrespondierende Datenkommunikationsschnittstellen des Moduls und des Datenträgers realisiert, beispielsweise über USB-, Mikro-SD- oder ISO-Schnittstellen gemäß ISO 7816, wobei die anschließende gesicherte/verschlüsselte Datenkommunikation im Rahmen des betreffenden Datenkommunikationsprotokolls geeignet abgewickelt wird. Alternativ zur kontaktbehafteten Datenkommunikation kann auch eine kontaktlose Datenkommunikationsverbindung aufgebaut und die Datenkommunikation über ein geeignetes kontaktloses Datenkommunikationsprotokoll abgewickelt werden.

Der Betreiber oder Hersteller des Endgeräts gestaltet dieses, wie oben erläutert, als eingebettetes System aus, z.B. als Datenverarbeitungseinrichtung zur Messwerterfassung mit Antenne und integriertem Telekommunikationsmodul zur Messwertweitergabe. Typischerweise verbleiben solche eingebetteten Systeme zumindest zeitweilig an einem vorgegebenen Betriebsort. Der Betriebsort kann beispielsweise der Standort einer stationären technischen Anlage sein oder in einem mobilen Verkehrsmittel liegen, beispielsweise in einem Kraftfahrzeug, einem Flugzeug, oder dergleichen.

Wie bereits angedeutet, kann der Hersteller oder Betreiber eines solchen Endgeräts die Personalisierung des darin eingebetteten Telekommunikationsmoduls dadurch veranlassen, dass der Datenträger mit den Personalisierungsdaten bei dem Modulhersteller angefordert wird, sofern der Datenträger nicht bereits zusammen mit dem Modul an den Endgerätehersteller ausgeliefert wurde. Dies kann mittels einer Anfrage an den Modulhersteller geschehen, welche eine eindeutige Modulidentifikation des eingebetteten Telekommunikationsmoduls umfasst, z.B. dessen ICCID, woraufhin dieser den zur Personalisierung des Moduls benötigten portablen Datenträger hergestellt, entsprechend einrichtet und an den Endgerätehersteller oder den Betreiber ausliefert. Aufgrund des separaten Anforderns des Datenträgers mittels einer eindeutig dem Telekommunikationsmodul, dem Endgerät und dessen Betriebsort zuzuordnenden Modulidentifikation kann auch das ansonsten notwendige Nachverfolgen ("Tracking") des Telekommunikationsmoduls und Rekonstruieren von dessen Verbleib vermieden werden.

Aus Sicherheitsgründen werden die Personalisierungsdaten und eventuell auch der Transportschlüssel vorzugsweise unmittelbar nach deren Einspielen in das Telekommunikationsmodul von dem Datenträger gelöscht, so dass eine unbeabsichtigte oder missbräuchliche Personalisierung eines anderen Telekommunikationsmoduls mit den gleichen Personalisierungsdaten verhindert wird.

Die korrespondierenden Transportschlüssel können symmetrische, zum Ver- und Entschlüsseln geeignete kryptographische Schlüssel sein, z.B. gemäß dem symmetrischen 3DES-Verfahren, und insofern dem Datenträger und dem Telekommunikationsmodul in identischer oder leicht abgewandelter Weise vorliegen. Alternativ können auch asymmetrische Transportschlüssel verwendet werden. Dann wird zum Verschlüsseln ein öffentlicher Schlüssel des Nachrichtenempfängers verwendet, so dass dieser die verschlüsselte Nachricht mittels des korrespondierenden geheimen Schlüssels entschlüsseln kann. Bei einer zweitseitigen Datenkommunikation zwischen dem Telekommunikationsmodul und dem Datenträger liegt dann jedem der Kommunikationspartner ein asymmetrischer öffentlicher Verschlüsselungsschlüssel und ein asymmetrischer geheimer Entschlüsselungsschlüssel vor.

Weitere Merkmale und Vorteile der Erfindung ergeben sich aus der folgenden Beschreibung verschiedener erfindungsgemäßer Ausführungsbeispiele und Ausführungsalternativen im Zusammenhang mit den begleitenden Zeichnungen. Darin zeigen:
- Figur 1: einen schematisierten erfindungsgemäßen Verfahrensablauf;
- Figur 2: eine Personalisierungsanordnung, umfassend ein Telekommunikationsmodul und einen portablen Datenträger; und
- Figur 3: einen schematisierten Ablauf einer der Datenkommunikation bei der Personalisierung des Telekommunikationsmoduls.

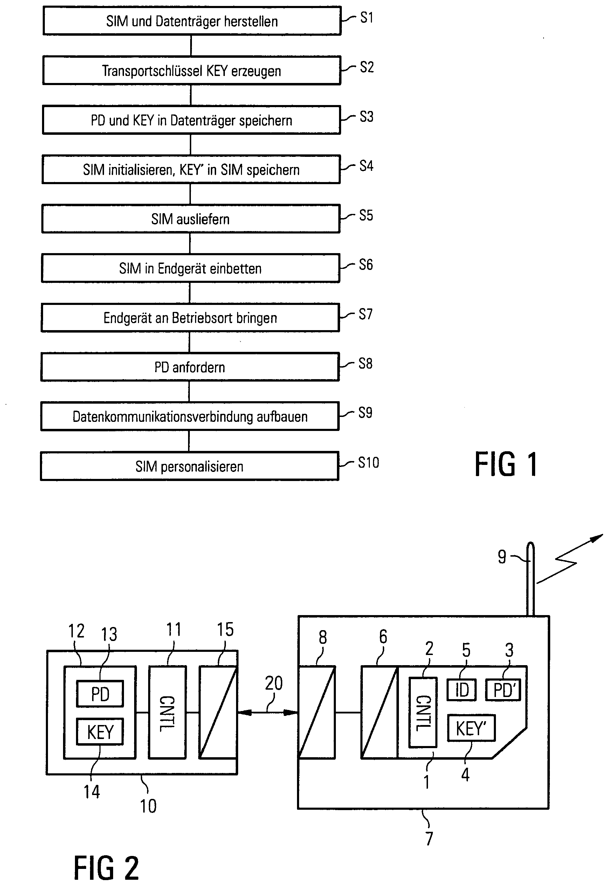

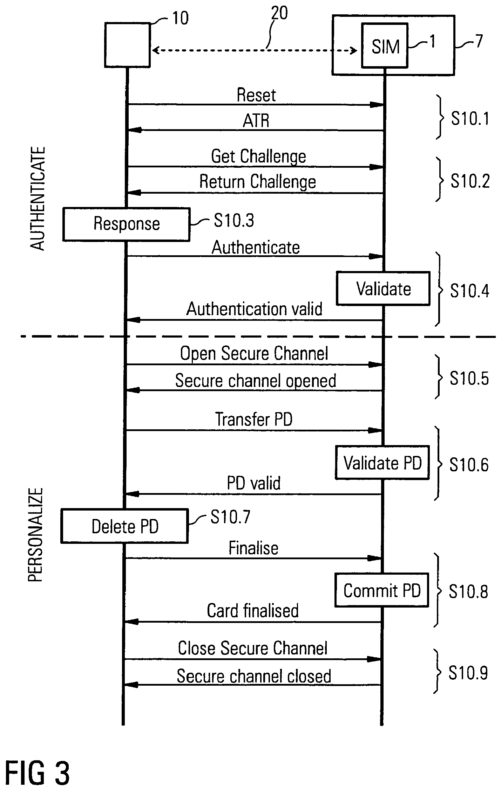

Fig. 1 zeigt den Verfahrensablauf bei der Personalisierung eines als SIM-Mobilfunkmodul ausgestalteten Telekommunikationsmoduls 1 an einem Betriebsort eines Endgeräts 7 gemäß Fig. 2, in welches das SIM-Modul 1 im unpersonalisierten Zustand eingebettet wurde. Die eigentliche Personalisierung des SIM-Moduls 1 durch einen portablen Datenträger 10 über eine gesicherte Datenkommunikationsverbindung 20 wird in Schritt S10 der Fig. 1 vorgenommen und im Zusammenhang mit den Schritten A10.1 bis S10.9 in Fig. 3 genauer erläutert.

Gemäß Schritt S1 der Fig. 1 werden das SIM-Modul 1 und der portable Datenträger 10 gemeinsam oder getrennt voneinander von einem Chipkartenmodul- bzw. Datenträgerhersteller hergestellt. Dabei werden insbesondere jeweils eine Steuereinrichtung 2, 11 und korrespondierende kontaktbehaftete Datenkommunikationsschnittstellen 6,15 eingebaut, z.B. USB-, MicroSD- oder andere geeignete Datenträger- und Chipkartenschnittstellen, über die zum Einspielen von Personalisierungsdaten 13 (PD, PD') in das SIM-Modul 1 eine Datenkommunikationsverbindung 20 zwischen dem Datenträger 10 und dem SIM-Modul 1 aufgebaut wird. Zudem sind in dem Datenträger 10 und dem SIM-Modul 1 jeweils Steuereinrichtungen 2, 11 vorgesehen, die in Wechselwirkung miteinander die Datenkommunikationsverbindung 20 aufbauen und die Datenkommunikation beim Einspielen der Personalisierungsdaten 13 in das SIM-Modul 1 steuern. Das SIM-Modul 1 besitzt zudem eine weitere Schnittstelle (nicht dargestellt) zu dem Endgerät 7 in welches es eingebettet werden soll, damit dieses über eine Antenne 9 einen von dem SIM-Modul 1 vermittelten Zugang zu einem Mobilfunknetz nutzen kann.

In Schritt S2 erzeugt der Modulhersteller symmetrische Transportschlüssel (KEY, KEY') 4, 14, so dass lediglich der Modulhersteller im Besitz des symmetrischen Transportschlüssels 4, 14 ist. Alternativ zur Erzeugung von übereinstimmenden symmetrischen Transportschlüsseln 4, 14 sowohl für das SIM-Modul 1 als auch für den Datenträger 10 können auch zwei asymmetrische Schlüsselpaare erzeugt werden, wobei das SIM-Modul 1 und der Datenträger 10 jeweils einen öffentlichen und einen geheimen Schlüssel der beiden Schlüsselpaare bekommen. Die Transportschlüssel 4, 14 sind ausschließlich zur Personalisierung des SIM-Moduls 1 vorgesehen und werden für keine weiteren kryptographischen Operationen eingesetzt. Insofern können sie nach der Personalisierung durch die jeweilige Steuereinrichtung 2, 11 gelöscht werden.

In Schritt S3 werden Personalisierungsdaten 13 und der symmetrische Transportschlüssel 14 in dem Datenträger 10 gespeichert, vorzugsweise in einem sicheren Speicherbereich 12, der gegen Ausspähen und Manipulation besonders abgesichert ist. Die in den sicheren Speicher 12 eingebrachten Personalisierungsdaten 13 umfassen Modul-individuelle Daten, die sich von den Personalisierungsdaten 13 anderer SIM-Module unterscheiden. Hierzu zählen Nutzer-, Verwendungs- und/oder Dienstanbieter-abhängige Personalisierungsdaten, also Daten, die das SIM-Modul 1 im Hinblick auf einen späteren Nutzer oder Betreiber des SIM-Moduls 1 und/oder hinsichtlich einer Nutzung eines bestimmten Mobilfunknetzes individualisieren, für welches das SIM-Modul 1 einem Endgerät 7 Zugangsdaten bereitstellt.

Entsprechend wird das SIM-Modul 1 in Schritt S4 zwar initialisiert, d.h. mit Modul-unabhängigen Daten ausgestattet, die von einem späteren Nutzer oder Betreiber oder einem Mobilfunknetzanbieter unabhängig sind, eine "frühe" Personalisierung durch den Modulhersteller findet jedoch nicht statt. Stattdessen wird eine "späte" Personalisierung durch einen Hersteller oder Betreiber eines Endgeräts 7 vorbereitet, indem auch der Transportschlüssel 4 in dem SIM-Modul 1 hinterlegt wird. In diesem Zustand ist das SIM-Modul 1 mangels Personalisierung noch nicht bestimmungsgemäß zum Bereitstellen einer Mobilfunkverbindung einsetzbar, da es insbesondere noch keine Zugangsdaten für ein Mobilfunknetz umfasst.

Entgegen dem üblichen Vorgehen bei der Herstellung von SIM-Modulen 1, Chipkarten, Smart Cards oder dergleichen wird das SIM-Modul 1 in Schritt S5 unpersonalisiert an einen Nutzer des SIM-Moduls 1 bzw. einen Hersteller oder Betreiber eines Messendgeräts 7 ausgeliefert. Der Betreiber des Messendgeräts 7 kann das eingebettete SIM-Modul 1, wenn alle Personalisierungsdaten vorliegen, insbesondere der Standort der Messendgeräts 7 und das dort verfügbare Mobilfunknetz bekannt sind, selbst personalisieren. Dies ermöglicht einen sehr flexiblen Einsatz eines SIM-Moduls 1 durch den Endgerätebetreiber in einem Endgerät 7 und an einen Betriebsort, der bei der Herstellung des SIM-Moduls 1 durch den Modulhersteller noch gar nicht bekannt war. Diese Angaben werden also, sobald sie feststehen, dem Modulhersteller bereitgestellt, damit dieser den korrespondierenden portablen Datenträger 10 mit den Personalisierungsdaten 13 ausstatten und an den Endgerätebetreiber liefern kann.

In Schritt S6 baut der Endgerätehersteller das SIM-Modul 1 schließlich fest und in der Regel irreversibel in das Messendgerät 7 ein, so dass ein "Embedded System" entsteht, welches in eine technische Anlage zur Messwerterfassung und Weitergabe der Messwerte über das Mobilfunknetz an eine Leitstelle im Rahmen einer Überwachung oder Steuerung der Anlage integriert werden kann. Schließlich bringt der Endgerätehersteller oder ein Betreiber das Messendgerät 7 an den endgültigen Betriebsort, z.B. indem das Messendgerät 7 in einer technischen Anlage oder einem mobilen Verkehrsmittel zu deren/ dessen Überwachung und Steuerung installiert wird. Erst jetzt liegen alle Parameter vor, die in die noch durchzuführende Personalisierung eingehen müssen, insbesondere der Betriebsort des Messendgeräts 7 und damit das dort verfügbare Mobilfunknetz.

Diese Parameter werden dem Modulhersteller bereitgestellt, damit dieser geeignete Personalisierungsdaten 13 zur Personalisierung des SIM-Moduls 1 auf dem Datenträger 10 hinterlegen kann. Dies wird in Schritt S8 mit der Übermittelung der Parameter und einer eindeutigen ICCID-Identifikationsnummer 5 des SIM-Moduls 1 an den Modulhersteller veranlasst, wodurch derjenige portable Datenträger 10 bei dem Modulhersteller angefordert wird, der die für das SIM-Modul 1 benötigten Personalisierungsdaten 13 bereitstellt. Der Datenträger 10 wird dann entweder erst hergestellt oder nur noch mit den erforderlichen Personalisierungsdaten 13 versehen und an den Betreiber des Messendgeräts 7 ausgeliefert.

Schließlich wird in Schritt S9 am Betriebsort des Messendgeräts 7 eine Datenkommunikationsverbindung 20 zwischen dem portablen Datenträger 10 und dem SIM-Modul 1 aufgebaut, vorzugsweise eine kontaktbehaftet Verbindung von der Schnittstelle 15 des Datenträgers 10 über die korrespondierende Schnittstelle 8 des Messendgeräts 7 weiter zu der Schnittstelle 6 des SIM-Moduls 1, welche z.B. als USB-, Mikro-SD- oder ISO-Schnittstellen ausgestaltet sind. Hierbei kann die Datenkommunikationsverbindung 20 zwischen dem portablen Datenträger 10 und dem SIM-Modul 1 also nicht nur direkt erfolgen, sondern auch wie in Fig. 2 über eine geeignete Schnittstelle 8 des Messendgeräts 7, welche die im Messendgerät 7 liegende Schnittstelle 6 des SIM-Moduls 1 aus dem Messendgerät 7 hinaus verlängert. Bei dieser mittelbaren Datenkommunikationsverbindung 20 zwischen dem Datenträger 10 und dem SIM-Modul 1 wird das verwendete Datenkommunikationsprotokoll vorzugsweise beibehalten.

Schließlich wird in Schritt S10 die eigentliche Personalisierung des SIM-Moduls 1 durch den Datenträger 10 vorgenommen, indem die Personalisierungsdaten 13 über die Datenkommunikationsverbindung 20 in das SIM-Modul 1 als Personalisierungsdaten 3 eingespielt werden. Die Schritte S9 und S10 werden veranlasst, gesteuert und durchgeführt von den beiden Steuereinrichtungen 2, 11 des SIM-Moduls 1 und des Datenträgers 10, die die Datenkommunikationsverbindung 20 herstellen und das Personalisieren des SIM-Moduls 1 in Wechselwirkung koordinieren.

Fig. 3 illustriert die Kommunikationsschritte S101 bis S10.9 im Rahmen des Personalisierungsschritts S10 der Fig. 1, die beim Einspielen der Personalisierungsdaten 13 in das SIM-Modul 1 durchgeführt werden.

Die in Fig. 3 illustrierte Datenkommunikation 20 zwischen dem Datenträger 10 und dem SIM-Modul 1 unterteilt sich in zwei Phasen, nämlich die Authentisierungsphase des Datenträgers 10 gegenüber dem SIM-Modul 1 (AUTHENTICATE) mit den Schritten S10.1 bis S10.4 sowie die eigentliche Personalisierungsphase mit den Schritten S10.5 bis S10.9 (PERSONALIZE). In dem Verfahrensablauf gemäß Fig. 3 übernimmt der portable Datenträger 10 die bei der Chipkartenkommunikation übliche aktive Rolle des Terminals bzw. Lesegeräts, während das SIM-Modul 1 die reaktive Rolle übernimmt. Deshalb besteht jeder Datenkommunikationsschritt immer aus zwei Teilschritten, nämlich einer Anforderung (z.B. eine "Command-APDU") des Datenträgers 10 an das SIM-Modul 1 und einer Antwort (z.B. eine "Response-APDU") des SIM-Moduls 1 an den Datenträger 10.

In Schritt S10.1 wird die Datenkommunikation 20 mit einer Reset-Sequenz begonnen. Hierbei sendet der Datenträger 10 ein Reset-Signal an das SIM-Modul 1, mit welchem dem SIM-Modul 1 der Beginn einer Datenkommunikation 20 angezeigt wird und ein "Rücksetzen" des SIM-Moduls 1 in einen definierten Ausgangszustand veranlasst wird. In Reaktion auf das Reset-Signal sendet das SIM-Modul 1 ein beantwortendes ATR-Signal ("Answerto-Reset") an den Datenträger 10, in dem das von dem SIM-Modul 1 unterstützte Datenkommunikationsprotokoll sowie diverse weitere Kommunikations- und Protokollparameter mitgeteilt werden.

Anschließend wird in den darauffolgenden Schritten S10.2 bis S10.4 eine "Challenge/Response"-Authentisierung des Datenträgers 10 gegenüber dem SIM-Modul 1 durchgeführt, um sicherzustellen, dass es sich bei dem Datenträger 10 um eine autorisierte Instanz bzw. um genau denjenigen Datenträger 10 handelt, der die benötigten Personalisierungsdaten 13 bereitstellt. Hierzu wird in Schritt S10.2 zunächst ein Get-Challenge-Signal an das SIM-Modul 1 gesendet, mit dem dieses aufgefordert wird, eine "Challenge" (Herausforderung, Aufgabe) an den Datenträger 10 zu richten, die auf einem gemeinsamen Geheimnis des SIM-Moduls 1 und des Datenträgers 10 beruht, und welche mit dem Return-Challenge-Signal des SIM-Moduls 1 z.B. in Form einer Zufallszahl bereitgestellt wird.

In Schritt S10.3 berechnet der Datenträger 10 ein Antwortsignal ("Response") auf die "Challenge" des SIM-Moduls 1, beispielsweise indem die empfangene Zufallszahl mit einem geeigneten geheimen Schlüssel verschlüsselt wird, welcher ein gemeinsames Geheimnis des SIM-Moduls 1 und des Datenträgers 10 repräsentiert. Insbesondere kann die auf diese Weise erzeugte "Response" ein Kartenkryptogramm des SIM-Moduls 1 sein, welches im Schritt S10.4 mit einem Authenticate-Signal an das SIM-Modul 1 gesendet und von diesem verifiziert wird ("Validate"), zum Beispiel indem die "Response" mit einem dem SIM-Modul 1 vorliegenden Kartenkryptogramm verglichen oder erst mit dem gemeinsamen Geheimnis entschlüsselt und dann mit der mit dem Return-Challenge-Signal (Schritt S10.2) gesendeten Zufallszahl vergleichen wird. Bei einem positiven Ergebnis der Verifikation antwortet das SIM-Modul 1 schließlich mit einem Authenticate-Valid-Signal zur Bestätigung der korrekten Authentifizierung des Datenträgers 10.

Bei Bedarf kann noch eine zweite Authentisierungsphase durchgeführt werden, bei der sich das SIM-Modul 1 gegenüber dem Datenträger 10 in analoger Weise über ein Challenge-Response-Verfahren authentifiziert, so dass dann eine wechselseitige Authentifizierung vorliegt.

Mit dem Schritt S10.5 wird die eigentliche Personalisierungsphase eingeleitet und der sichere Datenkommunikationskanal 20 mittels dem dem Datenträger 10 und dem SIM-Modul 1 übereinstimmend vorliegenden symmetrischen Transportschlüssel 14 etabliert ("Open secure channel"; "Secure channel opened").

In Schritt S10.6 werden von der Steuereinrichtung 11 des Datenträger 10 zunächst die Personalisierungsdaten 13 aus dem gesicherten Speicher 12 entnommen, mit dem Transportschlüssel 14 symmetrisch verschlüsselt und an das SIM-Modul 1 übertragen ("Transfer PD"). Die Steuereinrichtung 2 des SIM-Moduls 1 entschlüsselt dann die empfangenen Personalisierungsdaten mit dem korrespondierenden Transportschlüssel 4 und prüft die resultierenden Personalisierungsdaten 3 auf Gültigkeit und Eignung z.B. anhand bestimmter Steuer- und Verwaltungsdaten innerhalb der Personalisierungsdaten 3 ("Validate PD") und sendet nach erfolgreicher Validierung ein PD-Valid-Signal an den Datenträger 10.

Nach Eingang des PD-Valid-Signals bei dem Datenträger 10 werden die Personalisierungsdaten 13 in Schritt S10.7 von der Steuereinrichtung 11 aus dem gesicherten Speicher 12 des Datenträgers 10 gelöscht. Dadurch wird einem Missbrauch der Personalisierungsdaten 13 vorgebeugt, beispielsweise einer unerlaubten Personalisierung weiterer SIM-Module mit den gleichen Personalisierungsdaten 13. Zusätzlich kann in Schritt S10.7 auch der Transportschlüssel 14 gelöscht werden.

In Schritt S10.8 wird die Personalisierung abgeschlossen, indem ein Finalize-Signal an das SIM-Modul 1 gesendet wird, aufgrund dessen die gültigen Personalisierungsdaten 3 von der Steuereinrichtung 2 des SIM-Moduls 1 an den betreffenden Stellen in Speichern und Registern des SIM-Moduls 1 derart installiert werden ("Commit PD"), dass das SIM-Modul 1 nun bestimmungsgemäß zum Bereitstellen von Mobilfunkverbindungen für das Messendgerät 7 eingesetzt werden kann. Das Finalize-Signal des Datenträgers 10 ist hierbei auch eine Bestätigung des Löschvorgangs in Schritt S10.7, ohne die die Personalisierungsdaten 3 aufgrund möglichen Missbrauchs nicht installiert werden würden. Bestätigt wird der Abschluss der Personalisierung mit einem Card-Finalized-Signal an den Datenträger 10, woraufhin in Schritt S10.9 der sichere Datenübertragungskanal 20 geschlossen und die Personalisierung beendet wird.

## Patentansprüche

1. Verfahren zum Personalisieren eines Telekommunikationsmoduls (1),
wobei das Telekommunikationsmodul (1) in ein Endgerät (7) fest eingebaut wird (S6) und auf einem portablen Datenträger (10) gespeicherte Personalisierungsdaten (13) über eine mittels korrespondierender Transportschlüssel (4, 14) des Datenträgers (10) und des fest eingebauten Telekommunikationsmoduls (1) gesicherte Datenkommunikationsverbindung (20) in das Telekommunikationsmodul (1) eingespielt werden (S10, S10.5-S10.9)
wobei ein Hersteller des Telekommunikationsmoduls (1) und des Datenträgers (10) im Rahmen eines Herstellungsprozesses das Telekommunikationsmodul (1) initialisiert (S4), die Personalisierungsdaten (13) in einem gesicherten Speicherbereich (12) des Datenträgers (10) speichert (S3) und nur dem Hersteller bekannte korrespondierende Transportschlüssel (4, 14) jeweils in dem Telekommunikationsmodul (1) und in dem gesicherten Speicherbereich (12) des Datenträgers (10) hinterlegt (S3, S4),
**dadurch gekennzeichnet, dass** an einem von einem Nutzer, Betreiber oder Hersteller des Endgeräts (7) bestimmten Betriebsort des Endgeräts (7) eine kontaktbehaftete Datenkommunikationsverbindung (20) zwischen dem Datenträger (10) und dem Telekommunikationsmodul (1) aufgebaut wird (S9; S10.1-S10.4) und die Personalisierungsdaten (13) in das Telekommunikationsmodul (1) eingespielt werden (S10.5-S10.9),
wobei der Datenträger (10) in das Telekommunikationsmodul (1) Personalisierungsdaten (3) einspielt (S10.6), welche Netzzugangsdaten zu zumindest einem Telekommunikationsnetzwerk umfassen, und das Endgerät (7) über eine von dem Telekommunikationsmodul (1) mittels der Netzzugangsdaten aufgebaute Telekommunikationsverbindung Daten versendet,
wobei anhand einer eindeutigen Modulidentifikation (5) des fest eingebauten Telekommunikationsmoduls (1) der portable Datenträger (10) zum Personalisieren des Telekommunikationsmoduls (1) angefordert wird (S8).

2. Verfahren nach Anspruch 1, **dadurch gekennzeichnet, dass** ein Betreiber oder Hersteller des Endgeräts (7) dieses als eine zumindest zeitweilig an einem vorgegebenen Betriebsort verbleibende Datenverarbeitungseinrichtung (7) ausgestaltet, das Telekommunikationsmodul (1) in die Datenverarbeitungseinrichtung (7) einbettet (S6) und die Datenverarbeitungseinrichtung (7) zum zumindest zeitweiligen Verbleiben und Betreiben an dem vorgegebenen Betriebsort bringt (S7).

3. Verfahren nach einem der Ansprüche 1 bis 2, **dadurch gekennzeichnet, dass** die Personalisierungsdaten (13) unmittelbar nach dem Einspielen in das Telekommunikationsmodul (1) aus dem Datenträger (10) gelöscht werden (S10.7).

4. Verfahren nach einem der Ansprüche 1 bis 3, **dadurch gekennzeichnet, dass** die Personalisierungsdaten (13) mittels symmetrischer Transportschlüssel (4, 14) gesichert in das Telekommunikationsmodul (1) eingespielt werden (S10.5, S10.6).

5. Verfahren nach einem der Ansprüche 1 bis 4, **dadurch gekennzeichnet, dass** beim Einspielen der Personalisierungsdaten (13) in das Telekommunikationsmodul (1) eine zweiseitige Datenkommunikation (20) durchgeführt wird (S10.6), welche mittels Verschlüsselungs- und Entschlüsselungstransportschlüssel (4, 14) des Telekommunikationsmoduls (1) und des Datenträgers (10) gesichert wird.

6. Telekommunikationsmodul (1), wobei eine Datenkommunikationsschnittstelle (6) zum Aufbau einer gesicherten Datenkommunikationsverbindung (20) zu einem portablen Datenträger (10), einen mit einem Transportschlüssel (14) des Datenträgers (10) korrespondierenden Transportschlüssel (4) zur Sicherung der Datenkommunikationsverbindung (20) sowie durch eine Steuereinrichtung (2), die eingerichtet ist, gesicherte Personalisierungsdaten (13) mit Hilfe des Transportschlüssels (4) über die Datenkommunikationsverbindung (20) von dem Datenträger (10) zu empfangen, **dadurch gekennzeichnet, dass** das Telekommunikationsmodul (1) eingerichtet ist, von dem Datenträger (10) durch ein Verfahren nach einem der Ansprüche 1 bis 5 personalisiert zu werden.

7. Endgerät (7), insbesondere Datenverarbeitungseinrichtung, **gekennzeichnet durch** ein darin fest eingebautes Telekommunikationsmodul (1) nach Anspruch 6.

8. Portabler Datenträger (10), **gekennzeichnet durch** eine Datenkommunikationsschnittstelle (15) zum Aufbau einer gesicherten Datenkommunikationsverbindung (20) zu einem Telekommunikationsmodul (1), einen mit einem Transportschlüssel (4) des Telekommunikationsmoduls (1) korrespondierenden Transportschlüssel (14) zur Sicherung der Datenkommunikationsverbindung (20), einen gesicherten Speicher (12), in dem der Transportschlüssel (14) und Personalisierungsdaten (13) gespeichert sind, sowie durch eine Steuereinrichtung (11), die mit Hilfe des Transportschlüssels (14) gesicherte Personalisierungsdaten (13) über die Datenkommunikationsverbindung (20) an das Telekommunikationsmodul (1) überträgt,
wobei der Datenträger (10) eingerichtet ist, ein Telekommunikationsmodul (1) nach Anspruch 6 durch ein Verfahren nach einem der Ansprüche 1 bis 5 zu personalisieren.

## Claims

1. A method for personalizing a telecommunication module (1), wherein the telecommunication module (1) is firmly incorporated (S6) in an end device (7) and personalization data (13) stored on a portable data carrier (10) are loaded (S10, S10.5-S10.9) into the telecommunication module (1) via a data communication connection (20) secured by means of corresponding transport keys (4, 14) of the data carrier (10) and the firmly incorporated telecommunication module (1),
wherein a manufacturer of the telecommunication module (1) and the data carrier (10) initializes (S4) the telecommunication module (1) within the scope of a manufacturing process, stores (S3) the personalization data (13) in a secure memory area (12) of the data carrier (10) and deposits (S3, S4) corresponding transport keys (4, 14) known only to the manufacturer respectively in the telecommunication module (1) and in the secure memory area (12) of the data carrier (10),
**characterized in that** at a place of operation of the end device (7) specified by a user, operator or manufacturer of the end device (7), a contact-type data communication connection (20) is set up (S9; S10.1-S10.4) between the data carrier (10) and the telecommunication module (1) and the personalization data (13) are loaded (S10.5-S10.9) into the telecommunication module (1),
wherein the data carrier (10) loads (S10.6) personalization data (3), which comprise network access data on at least one telecommunication network, into the telecommunication module (1), and the end device (7) sends data via a telecommunication connection set up by the telecommunication module (1) by means of the network access data,
wherein with the help of an unambiguous module identification (5) of the firmly incorporated telecommunication module (1) the portable data carrier (10) is requested (S8) to personalize the telecommunication module (1).

2. The method according to claim 1, **characterized in that** an operator or manufacturer of the end device (7) configures this as a data-processing device (7) remaining at least temporarily at a pre-specified place of operation, embeds (S6) telecommunication module (1) into the data-processing device (7) and brings (S7) the data-processing device (7) to an at least temporary remaining and operating at the pre-specified place of operation.

3. The method according to any of claims 1 to 2, **characterized in that** the personalization data (13) are deleted (S10.7) from the data carrier (10) immediately after the loading into the telecommunication module (1).

4. The method according to any of claims 1 to 3, **characterized in that** the personalization data (13) are loaded (S10.5, S10.6) into the telecommunication module (1) in a secure manner by means of symmetric transport keys (4, 14).

5. The method according to any of claims 1 to 4, **characterized in that** upon loading the personalization data (13) into the telecommunication module (1), a two-way data communication (20) is carried out (S10.6) which is secured by means of encryption and decryption transport keys (4, 14) of the telecommunication module (1) and the data carrier (10).

6. A telecommunication module (1), wherein a data communication interface (6) for setting up a secure data communication connection (20) to a portable data carrier (10), a transport keys (4) corresponding to a transport key (14) of the data carrier (10) for securing the data communication connection (20), as well as by a control device (2) which is devised to receive secure personalization data (13) with the help of the transport key (4) via the data communication connection (20) from the data carrier (10), **characterized in that** the telecommunication module (1) is devised to be personalized by the data carrier (10) by a method according to any of claims 1 to 5.

7. An end device (7), in particular a data-processing device, **characterized by** a telecommunication module (1) firmly incorporated therein according to claim 6.

8. A portable data carrier (10), **characterized by** a data communication interface (15) for setting up a secure data communication connection (20) to a telecommunication module (1), a transport key (14) corresponding to a transport key (4) of the telecommunication module (1) for securing the data communication connection (20), a secure memory (12) in which the transport key (14) and personalization data (13) are stored, as well as by a control device (11) which transfers (14) secured personalization data (13) with the help of the transport key via the data communication connection (20) to the telecommunication module (1), wherein the data carrier (10) is devised to personalize a telecommunication module (1) according to claim 6 by a method according to any of claims 1 to 5.

## Revendications

1. Procédé de personnalisation d'un module de télécommunication (1), cependant que le module de télécommunication (1) est installé (S6) à demeure dans un terminal (7) et que des données de personnalisation (13) mémorisées sur un support de données (10) portable sont introduites (S10, S10.5-S10.9) dans le module de télécommunication (1) par l'intermédiaire d'une connexion de communication de données (20) sécurisée au moyen de clé de transport (4, 14) correspondante du support de données (10) et du module de télécommunication (1) installé à demeure,
cependant qu'un fabricant du module de télécommunication (1) et du support de données (10) initialise (S4) le module de télécommunication (1) dans le cadre d'un processus de fabrication, mémorise (S3) les données de personnalisation (13) dans une zone sécurisée de mémoire (12) du support de données (10) et enregistre (S3, S4) respectivement dans le module de télécommunication (1) et dans la zone sécurisée de mémoire (12) du support de données (10) des clés de transport (4, 14) correspondantes connues uniquement par le fabricant,
**caractérisé en ce que**, à un endroit de fonctionnement du terminal (7) déterminé par un utilisateur, opérateur ou fabricant du terminal (7), une connexion de communication de données (20) avec contact entre le support de données (10) et le module de télécommunication (1) est établie (S9; S10.1-S10.4) et les données de personnalisation (13) sont entrées (S10.5-S10.9) dans le module de télécommunication (1),
cependant que le support de données (10) entre (S10.6) dans le module de télécommunication (1) des données de personnalisation (3) qui comprennent des données d'accès réseau à au moins un réseau de télécommunication, et que le terminal (7) envoie des données par l'intermédiaire d'une connexion de télécommunication établie par le module de télécommunication (1) au moyen des données d'accès réseau,
cependant que, à l'aide d'une identification univoque de module (5) du module de télécommunication (1) installé à demeure, le support de données (10) portable est sollicité (S8) de personnaliser le module de télécommunication (1).

2. Procédé selon la revendication 1, **caractérisé en ce qu'**un opérateur ou fabricant du terminal (7) configure ce dernier comme un dispositif de traitement de données (7) restant au moins temporairement à un endroit donné de fonctionnement, incorpore (S6) le module de télécommunication (1) dans le dispositif de traitement de données (7) et amène (S7) le dispositif de traitement de données (7) à rester au moins temporairement et être exploité à l'endroit donné de fonctionnement.

3. Procédé selon une des revendications de 1 à 2, **caractérisé en ce que** les données de personnalisation (13) sont effacées (S10.7) du support de données (10) juste après l'entrée dans le module de télécommunication (1).

4. Procédé selon une des revendications de 1 à 3, **caractérisé en ce que** les données de personnalisation (13) sont entrées (S10.5, S10.6) dans le module de télécommunication (1) sous forme sécurisée au moyen de clé de transport (4, 14) symétrique.

5. Procédé selon une des revendications de 1 à 4, **caractérisé en ce que**, lors de l'entrée des données de personnalisation (13) dans le module de télécommunication (1), une communication de données (20) bidirectionnelle est effectuée (S10.6), laquelle est sécurisée au moyen de clé de transport de cryptage et de décryptage (4, 14) du module de télécommunication (1) et du support de données (10).

6. Module de télécommunication (1) comprenant une interface de communication de données (6) pour l'établissement d'une connexion de communication de données (20) sécurisée avec un support de données (10) portable, une clé de transport (4) correspondant à une clé de transport (14) du support de données (10) pour la sécurisation de la connexion de communication de données (20), ainsi qu'un dispositif de commande (2) conçu pour, à l'aide de la clé de transport (4), recevoir de la part du support de données (10), par l'intermédiaire de la connexion de communication de données (20), des données de personnalisation (13) sécurisées, **caractérisé en ce que** le module de télécommunication (1) est conçu pour être personnalisé par le support de données (10) par un procédé selon une des revendications de 1 à 5.

7. Terminal (7), en particulier dispositif de traitement de données, **caractérisé par** un module de télécommunication (1) selon la revendication 6 y étant installé à demeure.

8. Support de données (10) portable, **caractérisé par** une interface de communication de données (15) pour l'établissement d'une connexion de communication de données (20) sécurisée avec un module de télécommunication (1), par une clé de transport (14) correspondant à une clé de transport (4) du module de télécommunication (1) pour la sécurisation de la connexion de communication de données (20), par une mémoire (12) sécurisée dans laquelle la clé de transport (14) et des données de personnalisation (13) sont mémorisées, ainsi que par un dispositif de commande (11) qui, à l'aide de la clé de transport (14), transmet des données de personnalisation (13) sécurisées au module de télécommunication (1) par l'intermédiaire de la connexion de communication de données (20),
cependant que le support de données (10) est conçu pour personnaliser un module de télécommunication (1) selon la revendication 6 par un procédé selon une des revendications de 1 à 5.
